Europäisches Patentamt

European Patent Office

Office européen des brevets

(19)

(11) **EP 0 667 033 B1**

(12) **EUROPÄISCHE PATENTSCHRIFT**

(45) Veröffentlichungstag und Bekanntmachung des Hinweises auf die Patenterteilung:
**03.03.1999 Patentblatt 1999/09**

(21) Anmeldenummer: **93922546.2**

(22) Anmeldetag: **11.10.1993**

(51) Int Cl.6: **H01J 25/02**, H01J 23/087

(86) Internationale Anmeldenummer:
**PCT/EP93/02783**

(87) Internationale Veröffentlichungsnummer:
**WO 94/10699 (11.05.1994 Gazette 1994/11)**

(54) **VERFAHREN ZUR ERHÖHUNG UND/ODER SICHERSTELLUNG DES WIRKUNGSGRADS EINES GYROTRONS UND GYROTRON ZUR DURCHFÜHRUNG DES VERFAHRENS**

METHOD OF INCREASING AND/OR ENSURING THE EFFICIENCY OF A GYROTRON, AND A GYROTRON DESIGNED TO CARRY OUT THE METHOD

PROCEDE PERMETTANT D'AUGMENTER ET D'ASSURER L'EFFICACITE D'UN GYROTRON ET GYROTRON PERMETTANT LA REALISATION DE CE PROCEDE

(84) Benannte Vertragsstaaten:
**CH DE FR GB LI**

(30) Priorität: **27.10.1992 DE 4236149**

(43) Veröffentlichungstag der Anmeldung:
**16.08.1995 Patentblatt 1995/33**

(73) Patentinhaber: **Forschungszentrum Karlsruhe GmbH**
**76133 Karlsruhe (DE)**

(72) Erfinder:
- **DUMBRAJS, Olgierd**
  **FIN-0220 Espoo 20 (FI)**
- **MÖBIUS, Arnold**
  **D-76344 Eggenstein-Leopoldshafen (DE)**

(74) Vertreter: **Rückert, Friedrich, Dr. et al**
**Forschungszentrum Karlsruhe GmbH**
**Stabsabteilung**
**Patente und Lizenzen**
**Weberstrasse 5**
**76133 Karlsruhe (DE)**

(56) Entgegenhaltungen:
**FR-A- 2 301 903**

- **IEEE TRANSACTIONS ON MICROWAVE THEORY AND TECHNIQUES Bd. MTT-30, Nr. 1, Januar 1982, NEW YORK US Seiten 42 - 46 M. E. READ ET AL. 'Experimental Examination of the Enhancement of Gyrotron Efficiencies by Use of Profiled Magnetic Fields'**

- **INTERNATIONAL JOURNAL OF ELECTRONICS Bd. 65, Nr. 3, September 1988, LONDON GB Seiten 309 - 325 M. E. READ ET AL. 'Experimental study of a 115 GHz quasi-optical gyrotron with a large cavity'**
- **NUCLEAR INSTRUMENTS & METHODS IN PHYSICS RESEARCH, SECTION - A: ACCELERATORS, SPECTROMETERS, DETECTORS AND ASSOCIATED EQUIPMENT Bd. A278, Nr. 3, 15. Juni 1989, AMSTERDAM NL Seiten 788 - 806 M. E. COUPRIE 'Optimization of the permanent magnet optical klystron for the SUPER-ACO storage ring free electron laser'**
- **BROWN BOVERI REVIEW Bd. 74, Nr. 6, Juni 1987, BADEN CH Seiten 303 - 307 H. G. MATHEWS ET AL. 'The Gyrotron - A Key Component of High-Power Microwave Transmitters'**
- **NUCLEAR INSTRUMENTS & METHODS IN PHYSICS RESEARCH, SECTION - A: ACCELERATORS, SPECTROMETERS, DETECTORS AND ASSOCIATED EQUIPMENT Bd. A258, Nr. 3, 15. August 1987, AMSTERDAM NL Seiten 503 - 507 R. BECKER AND AL. 'Current loops to add axial and transverse fields to solenoids'**
- **IEEE TRANSACTIONS ON MAGNETICS Bd. MAG-22, Nr. 5, September 1986, NEW YORK US Seiten 1063 - 1065 P. CLARKE ET AL. 'Shaping of cylindrically symmetric magnetic fields with permanent magnets.'**

## Beschreibung

Die Erfindung betrifft ein Verfahren zur Erhöhung des Wirkungsgrads eines Gyrotrons und ein Gyrotron zur Durchführung dazu.

Gyrotrons sind Quellen, die zur Erzeugung von hohen Mikrowellenleistungen entwickelt wurden, wie sie zur Heizung von Fusionsplasmen benötigt werden. Typische Größenordnungen liegen bei Ausgangsleistung und Frequenzen im Bereich von 100 GHz.

Den grundsätzlichen Aufbau und die Beschreibung eines Gyrotrons zeigt Meinke-Gundlach in "Taschenbuch der Hochfrequenztechnik" (Springer-Verlag Berlin Heidelberg New York Tokyo 1986) auf den Seiten M82-M85. Insbesondere Hochleistungsgyrotrons sind als Zusatzheizeinrichtung für Fusionsplasmen vorgesehen (siehe Seiten S17 und S18)

Gyrotrons haben bei längs der Achse konstanten oder streng monoton oder einfach linear sich ändernden Magnetfeldern derzeit einen elektrischen Wirkungsgrad von 50% erreicht. Eine weitere Erhöhung desselben ist zumindest im Einsatzbereich für die Forschung derzeit nicht so drängend. Allerdings beginnen Gyrotrons zunehmend für den industriellen Einsatz interessant zu werden, so daß die Frage des höheren Wirkungsgrads wirtschaftliche Bedeutung bekommt.

Untersuchungen in diese Richtung wurden von M.E. Read et al. durchgeführt und in IEEE Transactions on Microwave Theory and Techniques, Vol. MTT-30, No. 1, January 1982 auf den Seiten 42 bis 46 unter dem Titel "Experimental Examination of the Enhancement of Gyrotron Efficiencies by Use of Profiled Magnetic Fields" beschrieben. Der magnetische Gleichfeldverlauf im Resonator ist streng monoton steigend oder auch streng monoton fallend, kurz einfach linear verlaufend. Auch ein welliger Feldverlauf wird durch zusätzliche Permanentmagnete oder Windungsanordnungen im Resonatorbereich, oder durch entsprechende Führung des magnetischen Flusses über Eisen erreicht.

Damit läßt sich eine Steigerung des Wirkungsgrades des Gyrotrons erzielen, und zwar wird hier erreicht, daß Energie aus der axialen Geschwindigkeitskomponente der Elektronen zunächst in transversale Bewegungsenergie gewandelt und anschließend vom HF-Feld extrahiert wird. Durch diese Maßnahme wird jedoch nicht ein monoenergetisch verbrauchter Strahl erzeugt.

Der Erfindung liegt die Aufgabe zugrunde, den Gesamtwirkungsgrad von Gyrotrons wesentlich zu steigern, ja ihn bis nahe eins zu steigern und die beim Betrieb enstehende Wärmeentwicklung derart zu reduzieren, daß das Gyrotron mit geringer oder gar keiner Zwangskühlung betrieben werden kann.

Die Aufgabe wird erfindungsgemäß durch das Kennzeichen des Patentanspruchs 1 gelöst. Das Verfahren läßt sich unter Erreichung eines hohen Wirkungsgrads mit einem Gyrotron gemäß dem Patentanspruch 2 durchführen.

Die Unteransprüche 3 bis 6 geben vorteilhafte Bauformen des erfindungsgemäßen Gyrotrons wieder. So läßt sich bei größeren Resonatorlängen die Welligkeit des Gleichfelds durch einen räumlich entsprechend gewickelten Solenoiden, normal- oder supraleitend, erzeugen. Für kleinere Resonatorlängen sind Permanentmagnetschichtungen periodisch schwankender Feldstärke vorteilhaft. Auch kann eine kombinierte Bauweise aus Elektro- und Permanentmagneten vorteilhaft für bestimmte Anwendungsbereiche sein.

Im folgenden soll das Verfahren erläutert und nähers begründet werden. Hierzu sind in der Zeichnung vier Figuren aufgenommen. Es zeigt:

Figur 1    den grundsätzlichen Aufbau des Gyrotrons mit der erfindungsgemäßen Einrichtung zur Erzeugung des statischen, welligen Gleichfelds,

Figur 2    ein Schaubild der Linien konstanten Gesamtwirkungsgrads,

Figur 3    den Verlauf des Magnetfelds und des elektrischen Felds über der Resonatorlänge und

Figur 4    die Energieverteilung der Elektronen im verbrauchten Strahl.

Der Wirkungsgrad von Gyrotrons hängt von der geeigneten Wahl der Elektronzyklotronfrequenz im Verhältnis zur Resonanzfrequenz ab. Fertigungstoleranzen können beträchtlichen Einfluß auf die Resonanzfrequenz und somit auf den Wirkungsgrad des Gyrotrons haben. Zur Vermeidung von Fehlanpassungen zwischen Elektron-Zyklotron-Frequenz und Resonanzfrequenz des Gyrotrons variiert das Gleichmagnetfeld leicht längs der Resonatorachse.

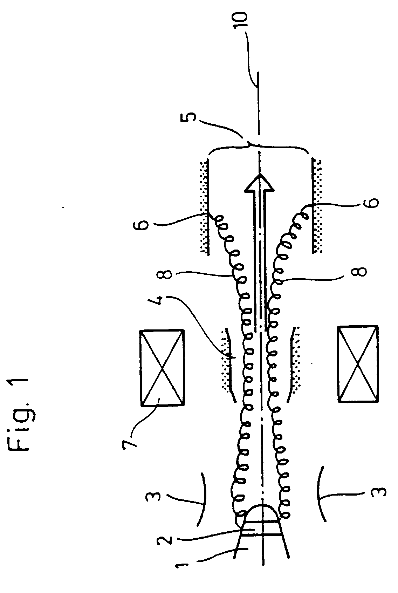

Im Gyrotron nach Fig. 1 propagieren die Elektronen auf helixförmigen Bahnen 8, von einem statischen Magnetfeld 12 geführt, von der Kathode 1 zum Resonator 4 und verlassen ihn als "verbrauchten" Strahl. D. h. er hat seine transversale Energie ganz bzw. weitestgehend im Resonator 4 abgegeben. Der "verbrauchte" Strahl trifft schließlich am Kollektor 6 auf. Die dadurch dort entstehende Wärme muß abgeführt werden. Das statische Magnetfeld 11, B, dient nicht nur zur Führung des Elektronenstrahls, sondern legt gemäß der Gleichung

$$\omega_c = eB/m\gamma$$

die Zyklotron-Frequenz der Elektronen im Resonator 4 fest. $m\gamma$ ist die relativistische Masse der Elektronen mit der Elementarladung e. Die Verstimmung zwischen der Elektron-Zyklotron-Frequenz und der Resonanzkreisfrequenz des Resonators 4 ist wesentlich für die Wechselwirkung, bei der den Elektronen je nach Einschußphase unterschiedlich viel Energie aus der transversalen Geschwindigkeitskomponente entnommen wird. Die Entnahme der Mikrowellenenergie erfolgt dann entweder in Achsrichtung 10 des Gyrotrons oder senkrecht zur Gyrotronachse 10.

Das Verhältnis von der aus der transversalen Geschwindigkeitskomponente entnommenen Energie zur ursprünglichen Energie in der transversalen Komponente wird transversaler Wirkungsgrad $\eta_\perp$ genannt. Das Verhältnis von transversaler zu axialer Geschwindigkeitskomponente $\alpha$ wird, durch die Kathode bedingt, typischerweise auf Werte von 1,5 begrenzt. Da beim Gyrotronmechanismus aus der axialen Komponente keine Energie entnommen werden kann, wird der elektrische Wirkungsgrad $\eta_{el}$ entsprechend verringert:

$$\eta_{el} = [\alpha^2/(1 + \alpha^2)]\eta_\perp \approx 0,7\eta_\perp$$

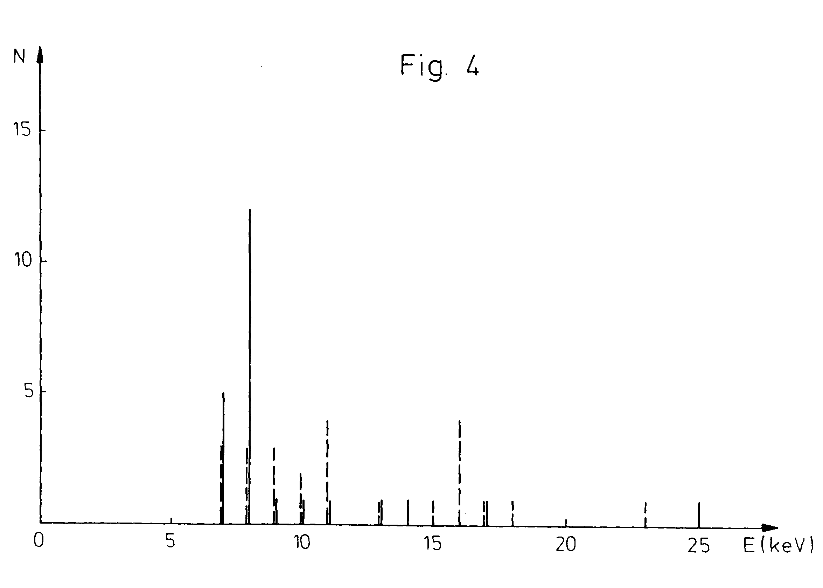

Der Gyrotronwirkungsgrad läßt sich dadurch steigern, daß man den Strahl auf einen vorgespannten Kollektor 6 auftreffen läßt. Die Höhe der Vorspannung im Vergleich zu dem Potential, gegen das die Elektronen im Mittel anlaufen können, ist der Kollektorwirkungsgrad $\eta_c$. Bei einem einstufig vorgespannten Kollektor 6 muß die Vorspannung kleiner als das Potential sein, das der Energie des langsamsten Elektrons entspricht. Je stärker die Streuung der Energieverteilung beim "verbrauchten" Strahl ist, um so niedriger ist der Wirkungsgrad des Kollektors 6. Bei bisher arbeitenden Gyrotrons mit hohen transversalen Wirkungsgraden ($\eta_\perp \approx 0,7$) ist die Streuung der Energieverteilung im "verbrauchten" Strahl extrem stark (siehe Figur 4 die gestrichelten Linien). Bei niedrigeren Wirkungsgraden ist die Streuung etwas schwächer, was in beiden Fällen nur niedrige Kollektor-Wirkungsgrade zuläßt.

Der Gesamtwirkungsgrad eines Gyrotrons mit vorgespanntem Kollektor 6 errechnet sich zu

$$\eta = \eta_{el}/[1 - \eta_c(1 - \eta_{el})]$$

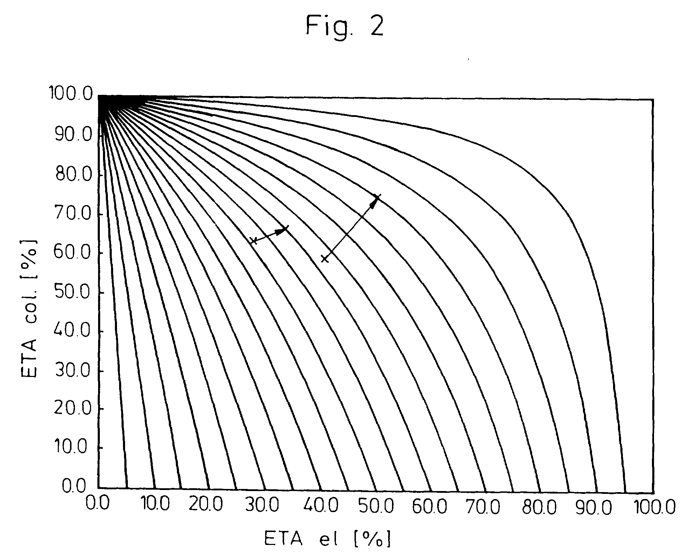

Fig. 2 zeigt die Linienschar für jeweils konstantem Gesamtwirkungsgrads $\eta$ als Funktion von $\eta_c$, $\eta_{el}$.

In Gyrotrons liegt der bei längs der Achse 10 konstanten oder monotonen Magnetfeldern 11, wie es bei derzeit in Betrieb befindlichen Gyrotrons der Fall ist, erreichbare transversale Wirkungsgrad bei $\eta_T = 0,7$, woraus für $\alpha = 1,5$ folgt: $\eta_{el} = 0,5$.

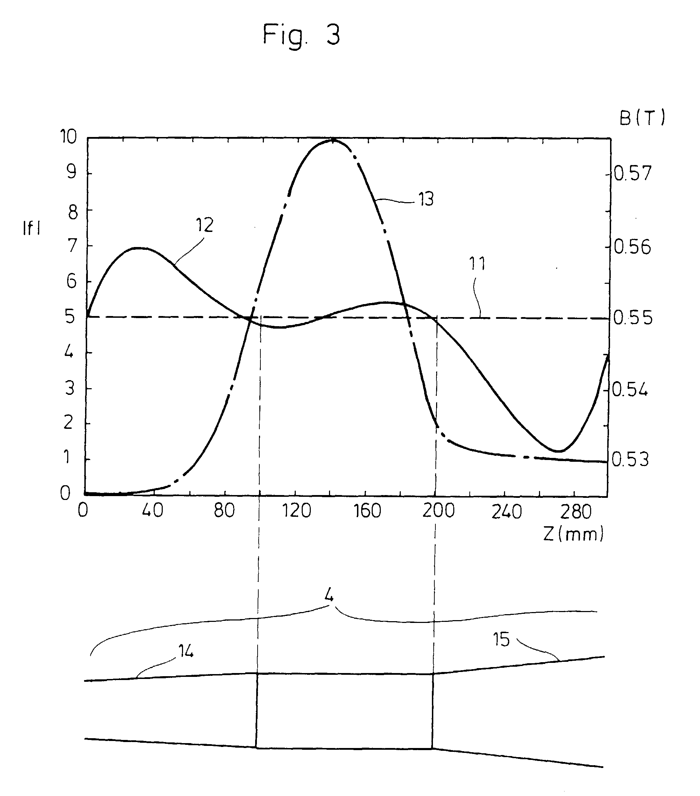

Der Gesamtwirkungsgrad läßt sich entweder durch einen mehrstufig vorgespannten Kollektor 6 steigern, oder dadurch, daß zum einen ein möglichst monoenergetischer, "verbrauchter" Elektronenstrahl erzeugt wird, was $\eta_c$ in die Höhe treibt. Zum anderen dadurch, daß $\eta_\perp$ erhöht wird. Beides, ein monoenergetischer "verbrauchter" Elektronenstrahl und/oder eine Steigerung von $\eta_\perp$ lassen sich erreichen, wenn statt des bisher verwendeten, konstanten Magnetfeldes 11 (siehe Figur 3 gestrichelt) mit monotoner axialer Abhängigkeit im Resonator 4 ein Magnetfeld 12 (siehe Figur 3 durchgezogen) mit bevorzugt schwacher Welligkeit ($\approx$ 3%) längs der Resonatorachse 10 erzeugt wird. Ein solches Magnetfeld 12 für kurze Resonatorlängen ist mit Permanentmagneten 7 leichter als mit Spulen (Solenoiden 7) zu erzeugen. Die Tiefe der Welligkeit kann längs der Resonatorachse 10 variieren. Die Periodenlänge beträgt einige 10% der Länge des Resonators 4.

Figur 3 zeigt die o. e. Feldverläufe 11, 12 über die Länge des Resonators 4 vom linken konischen Bereich (Taper 14) über den eigentlichen Resonator 4 hinweg zum rechten konischen Bereich (Taper 15). Der Resonator 4 des Gyrotrons ist als Längsschnitt im Prinzip in Figur 1 und unter dem Schaubild von Figur 3 angedeutet. Er wurde so zunächst für Parameterstudien angenommen. Die Strich-Punkt-Linie zeigt den Verlauf der elektrischen Feldverteilung 13 entlang des Resonators 4.

Figur 4 zeigt die Energieverteilung der Elektronen im "verbrauchten Strahl", d. h. hinter dem Resonator 4 in Richtung Kollektor 6. Bei der herkömmlichen Methode, also konstantes Magnetfeld 11, sind die Elektronen von 7 bis 16 keV noch verhältnismäßig gleichverteilt. Das wird auch am senkrechten Wirkungsgrad $\eta_\perp = 60\%$ deutlich.

Eine wesentliche Verbesserung wird mit dem inhomogenen, leicht welligen Magnetfeld 12 erreicht. Die Energieverteilung konzentriert sich nahezu auf die Linien bei 7 und 8 keV, was den möglichen Kollektor-Wirkungsgrad $\eta_c$ erheblich steigert, gleichzeitig war der senkrechte Wirkungsgrad $\eta_\perp$ größer, nämlich um 16%. Es kann also der senkrechte Wirkungsgrad $\eta_\perp$, wie auch der Kollektor-Wirkungsgrad $\eta_c$ durch ein geeignet inhomogenes, welliges Magnetfeld 12 im Resonatorbereich 4 deutlich gesteigert werden.

<u>Bezugszeichenliste</u>

| | |
|---|---|
| 1 | Kathode |
| 2 | Emitterring |
| 3 | Beschleunigungsanode |
| 4 | Wechselwirkungsraum, Resonator |
| 5 | Auskoppelleitung |
| 6 | Kollektor |
| 7 | Einrichtung, Solenoid, Permanentmagnet |
| 8 | Wendelbewegung, Bahn |
| 10 | Gyrotronachse, Resonatorachse |
| 11 | konstantes Magnetfeld |
| 12 | inhomogenes, welliges Magnetfeld |
| 13 | elektrische Feldverteilung |
| 14 | Taper |
| 15 | Taper |

**Patentansprüche**

1. Verfahren zur Erhöhung und/oder Sicherstellung des Wirkungsgrads eines Gyrotrons, dadurch gekennzeichnet, daß

    - einem die Wendelbewegung (8) der Elektronen erzeugenden statischen Gleichmagnetfeld (11) im Resonatorbereich ein welliges Magnetfeld überlagert wird, mit dem das Verhältnis aus entnommener transversaler Bewegungsenergie zur transversalen Bewegungsenergie vor der Entnahme für die den Resonator (4) durchlaufende Elektronen gleich gehalten wird,
    - die Amplitude der Welligkeit etwa 3 % der Gleichfeldstärke und die Periodenlänge mit einigen 10 % der gesamten Resonatorlänge gewählt wird, wodurch ein monoenergetischer Elektronenstrahl mit keiner transversalen Geschwindigkeitskomponente nach Verlassen des Resonatorraums erzeugt wird, und dadurch Fehlanpassungen von der dem Magnetfeld (11) abhängigen Elektron-Zyklotron-Frequenz an die Resonanzfrequenz des Gyrotronresonators vermieden werden,
    - die im Strahl verbliebene Energie durch einen einstufig vorgespannten Kollektor (6) zurückgewonnen wird.

2. Gyrotron zur Durchführung des Verfahrens nach Anspruch 1, bestehend aus einer Kathode (1) mit Emittering (2), einer Beschleunigeranode (3), einem Wechselwirkungsraum (Resonator) (4), einer Auskoppelleitung (5) und einem Kollektor (6) sowie einer Einrichtung (7) zur Erzeugung eines solenoidalen, statischen axialen magnetischen Gleichfelds (11), dadurch gekennzeichnet, daß

    - die Einrichtung (7) zur Erzeugung des solenoidalen, axialen magnetischen Gleichfelds (12), das die Wendelbewegung der Elektronen erzeugt, derart aufgebaut ist, daß im Bereich des Resonators (4) ein vorgegeben welliger Verlauf mit einer Amplitude von etwa 3 % des Gleichfelds (12) besteht und die Periodenlänge einige 10% der Resonatorlänge beträgt, wodurch alle den Resonator (4) durchlaufenden Elektronen beim Austritt aus dem Resonatorbereich (4) keine transversale Geschwindigkeitskomponente mehr haben,
    - der koaxial zur Gyrotronachse (10) liegende Kollektor (6) derart aufgebaut ist, daß er mit mindestens einer Vorspannung beaufschlagbar ist.

3. Gyrotron nach Anspruch 2, dadurch gekennzeichnet, daß die Einrichtung (7) zur Erzeugung des welligen Gleichfelds (12) ein entsprechend räumlich gewickeltes Solenoid (7) ist.

4. Gyrotron nach Anspruch 2, dadurch gekennzeichnet, daß die Einrichtung (7) zur Erzeugung des welligen Gleichfelds (12) ein entsprechend geschichteter Permanentmagnet (7) ist.

5. Gyrotron nach Anspruch 2, dadurch gekennzeichnet, daß die Einrichtung (7) zur Erzeugung des welligen Gleichfelds (12) ein supraleitendes Solenoid (7) ist.

6. Gyrotron nach Anspruch 2, dadurch gekennzeichnet, daß die Einrichtung (7) zur Erzeugung des welligen Gleichfelds (12) ein kombiniertes System aus Permanentmagneten und supra- oder normalleitenden Solenoiden ist.

**Claims**

1. Method of increasing and/or ensuring the efficiency of a gyrotron, characterised in that

    - a pulsating magnetic field is superimposed on a static steady magnetic field, which generates the helical movement (8) of the electrons, in the resonator region, with which the ratio of removed transverse kinetic energy to the transverse kinetic energy prior to the removal is kept identical for the electrons traversing the resonator (4),
    - the amplitude of the pulsation is selected to be about 3 % of the steady field strength, and the period length is selected to be some 10 % of the total resonator length, whereby a mono-energetic electron beam is generated with no transverse speed component after leaving the resonator chamber, and, in consequence, mismatchings of the electron-cyclotron frequency, which is dependent on the magnetic field (11), with the resonance frequency of the gyrotron resonator are avoided,
    - the energy remaining in the beam is recovered by a collector (6), which is initially biased in one stage.

2. Gyrotron for accomplishing the method according to claim 1, comprising a cathode (1) with emitter ring (2), an accelerator anode (3), an interaction chamber (resonator) (4), a decoupling line (5) and a collector (6) as well as an arrangement (7) for generating a solenoidal, static, axial, steady magnetic field (11), characterised in that

    - the arrangement (7) for generating the solenoidal, axial, steady magnetic field (12), which generates the helical movement of the electrons, is constructed in such a manner that there is, in the region of the resonator (4), a prescribed pulse configuration with an amplitude of about 3 % of the steady field (12), and the period length amounts to some 10 % of the resonator length, whereby all of the electrons traversing the resonator (4) no longer have a transverse speed component when being discharged from the resonsator region (4),

- the collector (6), which lies coaxially relative to the gyrotron axis (10), is constructed in such a manner that it can be acted upon with at least one initial bias potential.

**3.** Gyrotron according to claim 2, characterised in that the arrangement (7) for generating the pulsating steady field (12) is an appropriately spatially wound solenoid (7).

**4.** Gyrotron according to claim 2, characterised in that the arrangement (7) for generating the pulsating steady field (12) is a correspondingly layered permanent magnet (7).

**5.** Gyrotron according to claim 2, characterised in that the arrangement (7) for generating the pulsating steady field (12) is a superconductive solenoid (7).

**6.** Gyrotron according to claim 2, characterised in that the arrangement (7) for generating the pulsating steady field (12) is a combined system formed from permanent magnets and super- or normal-conductive solenoids.

## Revendications

**1.** Procédé pour augmenter et/ou garantir le rendement d'un gyrotron, caractérisé en ce qu'

- à un champ magnétique continu (11) statique produisant le déplacement en hélice (8) des électrons, on superpose dans le domaine de résonateur un champ magnétique ondulé grâce auquel on maintient constant le rapport de l'énergie transversale de déplacement prélevée à l'énergie transversale de déplacement avant le prélèvement pour les électrons traversant le résonateur (4),
- on choisit l'amplitude de l'ondulation à environ 3 % de l'intensité du champ continu et la longueur de période à quelques 10 % de la longueur globale du résonateur, grâce à quoi on produit un faisceau électronique monoénergétique sans composante de vitesse transversale à la sortie de la chambre de résonateur, et ainsi on évite des désaccords de la fréquence cyclotron électronique dépendant du champ magnétique (11) et de la fréquence de résonance du résonateur de gyrotron,

- l'énergie restant dans le faisceau est récupérée pour un collecteur mono-étage soumis à une prétension (6).

**2.** Gyrotron pour réaliser le procédé selon la revendication 1, constitué d'une cathode (1) avec une bague émettrice (2), une anode d'accélération (3), un espace d'interaction (résonateur) (4), une conduite de découplage (5) et un collecteur (6), ainsi qu'un dispositif (7) pour produire un champ continu (11) magnétique axial statique, solénoïdal, caractérisé en ce que

- le dispositif (7) de production du champ continu magnétique (12) axial solénoïdal, qui produit le déplacement en hélice des électrons est constitué de telle sorte que dans le domaine du résonateur (4) existe un comportement ondulé prescrit avec une amplitude d'environ 3 % du champ continu (12) et la longueur de période représente quelques 10 % de la longueur du résonateur grâce à quoi tous les électrons traversant le résonateur (4) à la sortie du domaine de résonateur ne présentent plus de composante de vitesse transversale,
- le collecteur (6) placé coaxialement à l'axe du gyrotron (10) est constitué de telle sorte qu'on peut au moins le soumettre à une prétension.

**3.** Gyrotron selon la revendication 2, caractérisé en ce que le dispositif (7) de production du champ continu ondulé (12) est un solénoïde bobiné de géométrie appropriée (7).

**4.** Gyrotron selon la revendication 2, caractérisé en ce que le dispositif (7) de production du champ continu ondulé (12) est un aimant permanent (7) feuilleté de manière appropriée.

**5.** Gyrotron selon la revendication 2, caractérisé en ce que le dispositif (7) de production du champ continu ondulé (12) est un solénoïde supraconducteur (7).

**6.** Gyrotron selon la revendication 2, caractérisé en ce que le dispositif (7) de production du champ continu ondulé (12) est un système combiné d'aimants permanents et de solénoïdes supraconducteurs ou à conduction normale.

EP 0 667 033 B1

Fig. 1

Fig. 2

## Fig. 3

Fig. 4